## Europäisches Patentamt
## European Patent Office
## Office européen des brevets

(11) Numéro de publication: **0 085 597**
**B1**

(12) **FASCICULE DE BREVET EUROPEEN**

(45) Date de publication du fascicule du brevet: **12.10.88**

(51) Int. Cl.⁴: **A 01 M 7/00**

(21) Numéro de dépôt: **83400117.4**

(22) Date de dépôt: **18.01.83**

(54) **Appareil mobile pour la pulvérisation d'un liquide de traitement des plantes.**

(30) Priorité: **29.01.82 FR 8201418**

(43) Date de publication de la demande:
**10.08.83 Bulletin 83/32**

(45) Mention de la délivrance du brevet:
**12.10.88 Bulletin 88/41**

(84) Etats contractants désignés:
**AT BE CH DE FR GB IT LI LU NL SE**

(56) Documents cités:
**DE-A-1 607 387**
**FR-A-1 564 543**
**FR-A-2 100 130**
**FR-A-2 305 116**
**FR-A-2 373 229**
**GB-A-2 014 834**

(73) Titulaire: **TECNOMA**
**54, Rue Marcel Paul**
**F-51206 Epernay (FR)**

(72) Inventeur: **Ballu, Patrick Jean-Marie**
**4, Rue de l'Isle**
**F-51100 Reims (FR)**

(74) Mandataire: **de Boisse, Louis**
**CABINET DE BOISSE 37, Avenue Franklin D. Roosevelt**
**F-75008 Paris (FR)**

Courier Press, Leamington Spa, England.

## Description

La présente invention concerne un appareil mobile pour la pulvérisation d'un liquide de traitement des plantes.

Pour cette application, on connaît déjà différents types d'appareil mobile, dont chacun comporte au moins une rampe de pulvérisation, qui est portée au-dessus du sol, par un véhicule tracteur ou remorqué, dans une position sensiblement horizontale et perpendiculaire à la direction d'avance dudit véhicule.

Dans les appareils connus de ce genre, la rampe de pulvérisation est généralement montée à l'arrière du véhicule, dont elle est solidaire, même si, dans certaines réalisations, des moyens sont prévus pour ajuster sa hauteur audessus du sol, en la faisant coulisser verticalement sur le support solidaire du tracteur. Tous les chocs et vibrations auxquels le véhicule est soumis au cours de son avance sont donc transmis, pratiquement sans amortissement, à la rampe, dont le mouvement par rapport au sol est par suite très éloigné du mouvement horizontal uniforme de translation, qui serait souhaitable pour obtenir un épandage parfaitement régulier du liquide pulvérisé sur les plantes à traiter. Cette irrégularité de l'épandage résulte non seulement des oscillations verticales que le véhicule peut transmettre à la rampe, mais aussi des pivotements du ou des essieux du véhicule, notamment autour d'un axe sensiblement horizontal, parallèle à la direction d'avance du véhicule (oscillations de roulis du véhicule), ou bien autour d'un axe sensiblement vertical (oscillations de lacet dues aux légers écarts du véhicule de part et d'autre de sa direction rectiligne d'avance). Sur certains terrains, la progression du véhicule porteur peut même s'accompagner de mouvements de tangage, c'est-à-dire de pivotements autour d'un axe transversal du véhicule, ces mouvements pouvant aussi nuire à la régularité de l'épandage.

La régularité de l'épandage obtenu peut être également perturbée lorsque le ou les essieux du véhicule porteur ne restent pas parfaitement parallèles au sol, par exemple parce que la ou les roues du véhicule, situées d'un même côté, roulent dans un sillon ou une ornière. Comme la rampe de pulvérisation reste sensiblement parallèle aux essieux, ses différents points ne se trouvent plus alors tous à la même distance du sol et, par suite, des plantes à traiter.

Les brevets français No. 1.564.543 et No. 2.100.130, ainsi que la demande de brevet en République Fédérale d'Allemagne No. 1.607.387 et la demande de brevet au Royaume-Uni No. 2.014.834 décrivent des appareils mobiles pour la pulvérisation d'un liquide de traitement des plantes, dont chacun comporte au moins une rampe de pulvérisation, qui est montée oscillante en dessous d'un axe, sensiblement horizontal et parallèle à la direction longitudinale d'avance du véhicule portant ladite rampe. Cette disposition connue permet d'éviter dans une large mesure, grâce à l'inertie de la rampe de pulvérisation, que celle-ci ne suive toutes les oscillations de roulis du véhicule, et qu'elle ne s'écarte ainsi trop souvent du parallélisme au sol horizontal, ce qui nuirait à la régularité de l'épandage. Dans DE-A-1607387, les oscillations de roulis sont, enoutre, guidés par des galets roulant sur une tringle de guidage.

Par contre, les mouvements ou oscillations de tangage et de lacet sont encore transmis intégralement à la rampe de pulvérisation, si bien qu'ils perturbent encore la régularité de l'épandage.

La demande de brevet français publiée sous le No. 2.305.116 décrit un appareil mobile de pulvérisation, dont la rampe de pulvérisation peut être suspendue au véhicule porteur par l'intermédiaire d'une rotule. Grâce à cette disposition et à l'inertie de la rampe de pulvérisation, aucun des mouvements ou oscillations de tangage, de lacet et de roulis n'est plus transmis intégralement à ladite rampe; en fait, ces mouvements erratiques du véhicule, au moins lorsqu'ils sont assez lents, ne sont plus transmis à la rampe qu'avec d'importantes réductions d'amplitude, et éventuellement avec des retards, en raison notamment des frottements au niveau de la suspension à rotule. Les mouvements brusques, les chocs ont cependant encore pour effet de communiquer à la rampe des oscillations d'assez grande amplitude par rapport au véhicule, si bien que, notamment au cours de ses oscillations de tangage et de lacet, ladite rampe peut venir heurter violemment certaines parties du véhicule; tout ceci nuit encore à la régularité de l'épandage et peut même endommager l'appareil de pulvérisation.

La demande de brevet français publiée sous le No. 2.373.229 décrit aussi un appareil mobile de pulvérisation, dont la rampe de pulvérisation est réunie au véhicule porteur par l'intermédiaire d'une rotule. Cependant, des moyens sont prévus pour éviter tout mouvement pendulaire de la rampe dans le sens de la marche, si bien que les mouvements ou oscillations de tangage du véhicule sont transmis intégralement à la rampe. D'autre part, des tampons immobilisent la rampe en rotation autour de l'axe de roulis, en ne lui permettant que des oscillations de très faible amplitude autour de cet axe. De ce fait, en cas de dévers important du véhicule, la rampe ne peut pas être ramenée en position horizontale par l'effet de la suspension pendulaire, comme dans le cas de la demande de brevet français No. 2.305.116. Au total les dispositions décrites dans la demande de brevet français No. 2.373.229 ne permettent pas d'obtenir un épandage parfaitement régulier dans toutes les conditions de déplacement du véhicule porteur.

L'un des buts principaux de la présente invention est d'améliorer la régularité de l'épandage produit par une rampe de pulvérisation à suspension pendulaire, en réduisant encore la transmission, à la rampe de pulvérisation, des mouvements erratiques du véhicule porteur, et en amortissant efficacement les chocs qui peuvent se produire entre la rampe et des parties du véhicule, notamment lorsque la rampe reprend sa position normale par rapport au véhicule, après en avoir été brusquement écartée par certains de ses mouvements erratiques, particulièrement brusques; ce but doit être en outre atteint sans renoncer aux avantages, précédemment indiqués, de la suspension pendulaire.

L'invention concerne un appareil pour la pulvérisation d'un liquide de traitement des plantes, comportant une rampe de pulvérisation, dont un élément de bâti est suspendu, par l'intermédiaire d'une rotule, à un élément de support, fixé à un véhicule, tracteur ou remorqué, de telle façon que, par rotation sur la rotule, l'élément de bâti avec la rampe puisse s'écarter en tous sens de l'élément de support. L'appareil selon la présente invention est caractérisé par le fait que des galets sont montés fous sur l'un des deux éléments, de façon à rouler sur des surfaces appropriées de l'autre élément, lorsque ces deux éléments sont en position normale c'est-à-dire rapprochés, le retour des deux éléments vers cette position normale, en cas de mouvements erratiques du véhicule tendant à écarter les deux éléments, étant due à une force de rappel constituée de façon inhérente par le poids de l'ensemble bâti-rampe aidé, éventuellement, par des moyens élastiques tendant à rapprocher de façon permanente les deux éléments.

Grâce à cette disposition selon la présente invention, lorsque l'élément de bâti de la rampe s'écarte de l'élément de support, fixé au véhicule, en raison de mouvements erratiques, de tangage ou de lacet, dudit véhicule, les moyens de rappel tendent aussitôt a ramener lesdits éléments dans leur position relative "normale", dans laquelle les galets, montés sur l'un des deux éléments, sont au contact des surfaces de roulement prévues sur l'autre élément; dans cette position "normale", la rampe de pulvérisation se trouve en général dans un plan perpendiculaire à l'axe longitudinal du véhicule porteur, c'est-à-dire dans un plan perpendiculaire à la direction moyenne d'avance du véhicule; dans ce même plan, la suspension pendulaire a pour effet de placer automatiquement la rampe en position horizontale, ce qui favorise la régularité de l'épandage du liquide pulvérisé; quant aux mouvements erratiques de roulis du véhicule, la rampe les suit sans que les galets cessent de rouler au contact de leurs surfaces de roulement, et avec une amplitude encore davantage amortie par le frottement de roulement desdits galets.

Dans une première forme de réalisation de l'invention, l'élément de bâti de la rampe de pulvérisation est suspendu à la rotule par au moins un bras qui s'étend, à partir dudit élément de bâti, en direction de la rotule et de l'élément de support, et -- les surfaces de roulement se trouvent, lorsqu'elles sont en contact avec les galets, dans un plan sensiblement vertical, passant entre l'élément de bâti et la rotule.

Grâce à cette disposition, le poids total de la rampe et du bras qui la supporte exerce sur cet ensemble, suspendu pendulairement à la rotule, un couple élastique de rappel, qui tend à amener le centre de gravité dudit ensemble dans le plan vertical, passant par ladite rotule; en fait, le pivotement de l'ensemble, produit par ce couple, est arrêté par la venue des galets en contact avec leurs surfaces de roulement, dans le plan vertical passant entre l'élément de bâti et la rotule, si bien que ledit contact est maintenu par un couple élastique résiduel, qui est proportionnel au poids dudit ensemble et à l'écartement longitudinal des deux plans verticaux mentionnés.

Dans une seconde forme de réalisation de l'invention, les moyens de rappel sont des moyens élastiques, disposés de façon à pousser normalement les galets et les surfaces de roulement en contact les uns avec les autres.

Selon une autre caractéristique avantageuse de l'invention, au moins la jante des galets est en un matériau élastique, ce qui contribue à amortir les retours de la rampe dans sa position normale.

Un guidage relatif, particulièrement précis, sûr et peu coûteux, de l'élément de bâti de la rampe sur l'élément de support du véhicule, peut être obtenu de la façon suivante: les moyens élastiques comprennent un ressort comprimé entre l'élément de bâti de la rampe et une butée arrière, solidaire d'une extrémité d'une tige, qui traverse librement ledit élément de bâti, et dont l'autre extrémité porte un galet fou, qui peut rouler, sans déplacement axial, dans un chemin de roulement, solidaire de l'élément de support.

A titre d'exemples, on a décrit ci-dessous et illustré schématiquement au dessin annexé, plusieurs formes de réalisation de l'appareil mobile de pulvérisation selon la présente invention; il s'agit de formes de réalisation dans lesquelles la rampe de pulvérisation est suspendue, de façon classique, à l'arrière du véhicule porteur.

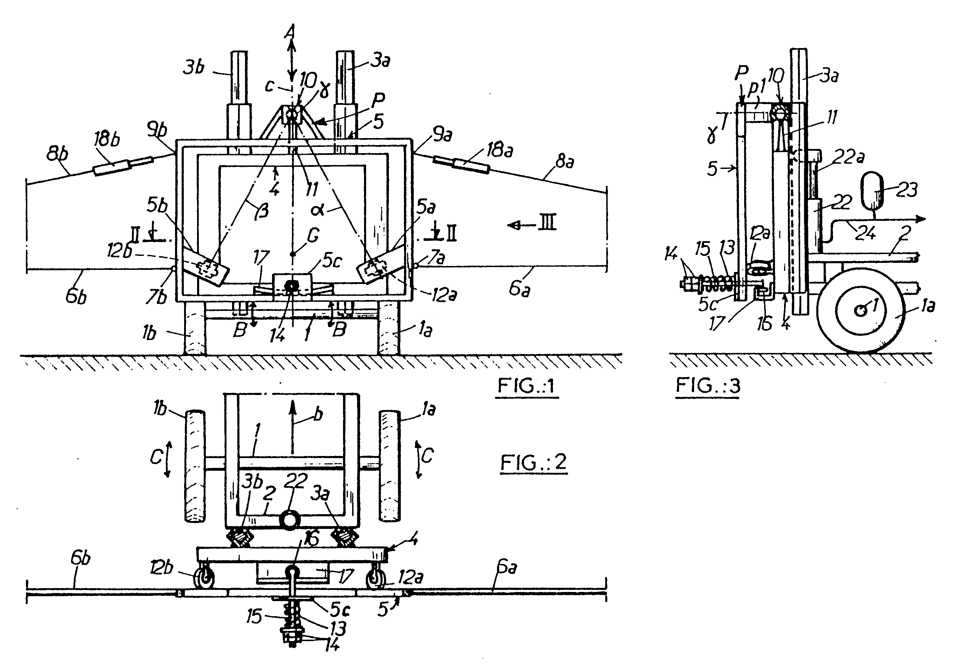

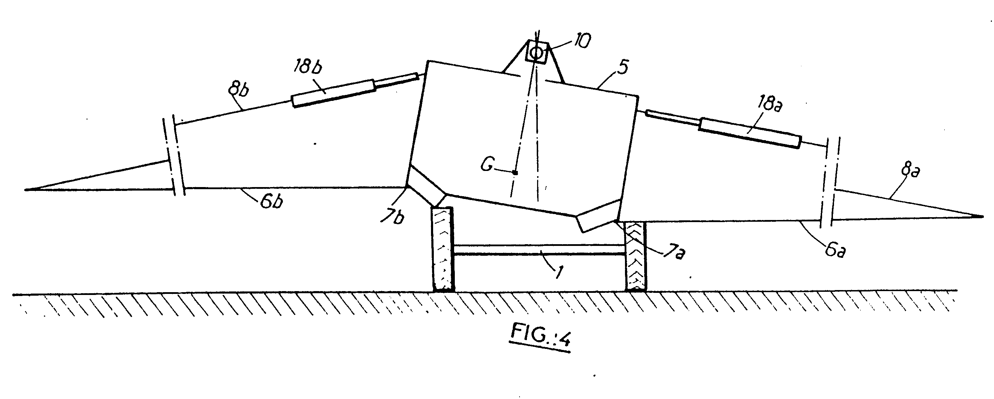

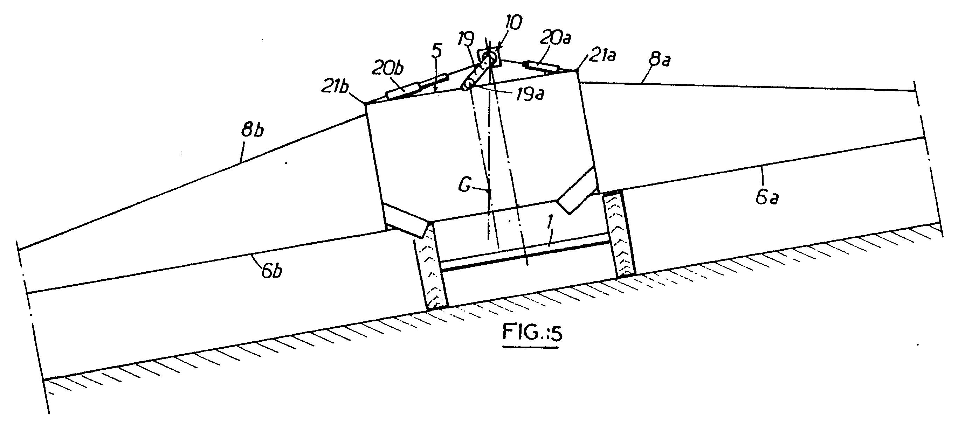

La figure 1 est une vue en élévation arrière d'une première forme de réalisation. La figure 2 est une vue partielle en coupe selon la ligne II-II de la figure 1. La figure 3 est une vue latérale partielle, dans le sens de la flèche III de la figure 1. La figure 4 est une vue en élévation arrière, correspondant à la figure 1, dans le cas où le véhicule porteur progresse perpendiculairement à la ligne de plus grande pente d'un terrain incliné. La figure 5 est une vue, correspondant à la figure 4, d'une seconde forme de réalisation de l'invention.

Dans la première forme de réalisation, illustrée sur les figures 1 à 4, 1 désigne l'essieu, unique ou arrière, du véhicule porteur, les roues correspondantes étant désignées par 1a et 1b. 2 désigne la partie arrière du châssis du véhicule porteur, qui peut être un tracteur agricole, ou une remorque, notamment une remorque portant un grand réservoir — non représenté — de liquide de traitement des plantes. Dans la forme de réalisation illustrée, des montants 3a et 3b sont soudés à la partie arrière 2 du châssis du véhicule, dans une direction perpendiculaire à l'essieu 1, c'est-à-dire verticalement lorsque les roues 1a et 1b reposent sur un sol horizontal. Un cadre sensiblement rectangulaire, 4, par exemple en profilés métalliques soudés, est monté coulissant sur les montants 3a et 3b, d'une façon bien connue en soi, qu'il n'est donc pas nécessaire de décrire en détail. Un vérin 22 est monté sur le châssis 2, ou est solidaire des montarts 3a et 3b, de manière que sa tige verticale 22a puisse lever le cadre 4 en le faisant coulisser sur les montants 3a, 3b, et l'immobiliser à une hauteur appropriée au-dessus du sol; ces moyens de levage, bien connus, sont, de préférence, télécommandables depuis la cabine du tracteur qui constitue le véhicule porteur, ou qui tire ce dernier.

Dans cette forme de réalisation, la rampe de pulvérisation, proprement dite, comporte, de façon connue en soi, un bâti central, 5, par exemple rectangulaire et également constitué par des profilés métalliques soudés; les dispositifs de pulvérisation, qui peuvent être d'un type quelconque, et qui n'ont pas été représentés, sont eux-mêmes portés par deux bras latéraux, 6a et 6b, ayat chacun une extrémité articulée sur la partie inférieure de l'un des côtés latéraux du bâti rectangulaire 5, de façon à pouvoir pivoter autour d'un axe, 7a ou 7b, perpendiculaire au plan du bâti rectangulaire 5. Chaque bras pivotant, tel que 6a ou 6b, est d'autre part supporté par un hauban, 8a ou 8b, dont une extrémité est fixée au côté correspondant du bâti rectangulaire 5, en un point, 9a ou 9b, situé très au-dessus de l'axe correspondant 7a ou 7b. La longueur normale de chacun des haubans 8a et 8b est telle qu'il soutient le bras latéral correspondant, 6a ou 6b, de la ramp de pulvérisation, dans une position senaiblement perpendiculaire au côté latéral correspondant du bâti rectangulaire 5.

Selon la présente invention, le côté supérieur du bâti rectangulaire 5 est suspendu au côté supérieur correspondant du cadre 4, par l'intermédiaire d'une potence P, d'un palier à rotule, 10, et d'une pièce verticale, 11. Comme visible sur la vue latérale schématique de la figure 3, l'extrémité inférieure de la pièce 11 est fixée sur le côté supérieur du cadre 4, tandis que l'extrémité supérieure de cette pièce 11 est solidaire de la rotule du palier 10; ce dernier est également solidaire d'une extrémité du brss pl de la potence P, dont l'autre extrémité est fixée au côté supérieur du bâti rectangulaire 5 de la rampe.

Vers les coins inférieurs de la face arrière du cadre rectangulaire 4, deux galets, 12a et 12b, sont montés, par exemple dans des chapes, de façon à tourner librement autour d'axes de rotation, dont les prolongements (α et β sur la figure 1) concourent sur l'axe géométrique horizontal de la rotule du palier 10 (il s'agit en fait de l'axe géométrique, désigné par γ sur les figures 1 et 3, qui passe par le centre de la rotule du palier 10 et qui y est perpendiculaire au plan du cadre rectangulaire 5). Lorsque, comme on l'expliquera ultérieurement, les plans du cadre 4 et du bâti 5 sont parallèles l'un à l'autre, dans certaines conditions, qui seront également précisées ci-après, les galets 12a et 12b peuvent rouler sur des surfaces de roulement appropriées, 5a et 5b (figure 1), montées sur la face arrière dudit bâti rectangulaire 5 et solidaires, par exemple, de ses côtés latéraux. Les galets 12a et 12b, ou tout au moins leurs jantes, sont constitués de préférence en un matériau élastique, assurant un bon amortissement des chocs, par exemple en caoutchouc, en élastomère, en matières synthétiques, etc.

Selon une autre caractéristique de l'invention, un ressort hélicoïdal 13 est comprimé entre un élément en forme de plaque, 5c, solidaire du côté inférieur du bâti rectangulaire 5, d'une part, et d'autre part, une paire d'écrou et de contre-écrou, 14, vissée sur une extrémité d'une tige filetée, 15; l'autre extrémité de la tige 15 traverse librement la plaque 5c et s'étend jusqu'à proximité du cadre rectangulaire 4, où ladite extrémité de la tige 15 porte un galet fou 16; celui-ci peut rouler, pratiquement sans déplacement axial, dans un chemin de roulement 17, qui, dans la forme de réalisation considérée, est matérialisé par une cornière à section en U, dont une aile est par exemple soudée près du bord inférieur du cadre rectangulaire 4, tandis que son autre aile, sensiblement parallèle au plan du cadre 4, empêche ledit galet 16 de s'échapper. De préférence, le chemin de roulement 17 est incurvé en arc de cercle, centré sur l'axe horizontal, γ de la rotule du palier 10. Comme cependant le rayon de courbure du chemin de roulement 17 est grand par rapport à sa longueur, il n'y a pas d'inconvénient à utiliser un chemin de roulement droit, et non pas incurvé.

Lorsque le véhicule tracteur progresse sur un plan horizontal senaiblement uni, les différents éléments de l'appareil de pulvérisation, selon la présente invention, occupent, par rapport audit véhicule et entre eux, les différentes positions relatives visibles sur les figures 1 à 3. Le poids de l'ensemble suspendu au palier à rotule 10, appliqué à son centre de gravité G (figure 1), maintient en effet cet ensemble dans la position où G se trouve dans un plan vertical passant par le centre de la rotule du palier 10; les côtés inférieur et supérieur du bâti central 5 de la rampe, ainsi que ses bras 6a et 6b, sont par suite horizontaux, et par suite parallèles au sol, dont ils sont donc également éloignés en tous points. Le galet 16 se trouve alors au milieu du chemin de guidage 17, c'est-à-dire en son point le plus bas s'il est incurvé. Le ressort 13, en prenant appui d'un côté sur le système d'écrou et de contre-écrou 14, et de l'autre sur la plaque 5c, applique le bâti rectangulaire 5 contre les galets 12a et 12b. L'ensemble du cadre 4 avec ses accessoires 12a, 12b, 17, et de la rampe 5-6, peut être ajusté en hauteur au-dessus du sol par coulissement vertical dudit cadre 4 sur les montants 3a et 3b, grâce aux moyens mentionnés précédemment. Si cependant l'essieu 1 du véhicule porteur subit des oscillations B autour de l'axe horizontal b qui coïncide avec la direction de la marche du véhicule, ou bien si l'essieu 1 reste incliné sur le sol au cours de la progression du véhicule, en raison de ce que l'une des roues 1a et 1b roule par exemple dans un sillon ou une ornière, l'ensemble de la rampe de pulvérisation 5-6 reprend ou conserve la position horizontale visible sur la figure 1 en raison de sa suspension pendulaire, si bien que les perturbations mentionnées, intervenant dans la progression du véhicule porteur, ne sont presque pas répercutées sur la rampe, dont la régularité d'épandage est par suite maintenue presque intégralement. Bien entendu, le maintien en position horizontale de la rampe 5-6, malgré l'inclinaison temporaire ou permanente de l'essieu 1 du véhicule tracteur, n'a été possible que grâce au roulement des galets 12a et 12b sur les surfaces de roulement 5a et 5b du bâti central 5, ce dernier mouvement étant rendu particulièrement aisé par le caractère élastique des jantes desdits galets.

Si, par contre, le véhicule tracteur amorce un lacet C vers la droite ou vers la gauche de l'axe b (figure 2), c'est-à-dire si son essieu 1 commence à pivoter autour de l'axe vertical c (figure 1), ce pivotement ayant lieu par exemple dans le sens inverse des aiguilles d'une montre, le cadre rectangulaire 4, qui est solidaire du châssis 2 par l'intermédiaire des montants 3a, 3b, effectue le même pivotement, mais, par suite de son inertie, le bâti central 5 de la rampe reste perpendiculaire à l'axe b, c'est-à-dire à la direction d'avance initiale du véhicule, si bien que le galet 12a cesse d'être en contact avec la surface correspondante, 5a, dudit bâti central 5, alors que le galet 12b reste en contact avec la surface de roulement 5b. Ce pivotement relatif du cadre 4 et du bâti 5 a pour effet d'augmenter la compression du ressort 13; par suite, lorsque, à la fin du lacet, le véhicule porteur reprend sa direction initiale d'avance b, ledit ressort 13, en se détendant, repousse la surface 5a du bâti central 5 au contact du galet 12a.

Enfin, les vibrations verticales A que le véhicule porteur peut communiquer au cadre 4, et par suite au palier à rotule 10, sont amorties par un amortisseur à gaz et à membrane, 23, d'un type connu, qui est connecté en parallèle sur la conduite d'alimentation 24 du vérin de levage 22.

Sur la figure 4, le véhicule porteur est supposé avancer dans une direction sensiblement perpendiculaire à la ligne de plus grande pente d'un sol incliné, si bien que ses essieux tels que 1 ne sont pas horizontaux, mais dirigés sensiblement selon la ligne de plus grande pente. Par suite de la suspension pendulaire de la rampe en dessous du palier 10, son bâti central 5 prend la position visible sur la figure 4, pour laquelle le centre de gravité G de la rampe se trouve dans un plan vertical passant par le centre de la rotule du palier 10, les côtés supérieur et inférieur du bâti 5 étant horizontaux. Si cependant les bras 6a et 6b de la rampe étaient maintenus perpendiculaires aux côtés latéraux du bâti 5, comme sur la figure 1, ils ne se trouveraient pas à des distances, égales en tous points, du sol, puisque les bras de la rampe se trouvent alors sensiblement dans un plan vertical passant par la ligne de plus grande pente. Pour pallier cet inconvénient et obtenir un épandage régulier, même dans ce cas d'exploitation, la présente invention prévoit d'insérer, dans chacun des haubans, 8a et 8b, qui supportent respectivement lea bras pivotants 6a et 6b de la rampe, des organes permettant d'ajuster la longueur desdits haubans, par exemple sous la forme de vérins, 18a et 18b, de préférence télécommandables à partir de la cabine du véhicule tracteur. On voit sur la figure 4 qu'il est toujours possible d'ajuster, au moyen de ces vérins 18a et 18b, la longueur des haubans 8a et 8b, de manière que les deux bras latéraux 6a et 6b de la rampe deviennent, par pivotement autour de leurs axes respectifs, 7a et 7b, l'un et l'autre parallèles à la ligne de plus grande pente du sol.

Dans la variante illustrée sur la figure 5, le côté supérieur du bâti central 5 de la rampe est suspendu au palier à rotule 10 par l'intermédiaire d'une biellette 19, dont l'extrémité inférieure est de préférence articulée, en 19a, au milieu dudit côté supérieur du bâti central 5. D'autre part, des organes rigides de longueurs réglables, tels que des vérins 20a et 20b, sont respectivement interposés entre le palier à rotule 10 et des points, 21a, 21b, du côté supérieur du bâti central 5, écartés de part et d'autre du point d'articulation, 19a, de la biellette 19; dans la forme de réalisation illustrée, les deux points 21a et 21b, en chacun desquels est également prévue une articulation, ont été choisis près des deux coins supérieurs du bâti rectangulaire 5.

Lorsque le véhicule porteur progresse, comme illustré sur la figure 5, dans une direction sensiblement perpendiculaire à la ligne de plus grande pente d'un terrain incliné, on ajuste simultanément les longueurs totales des deux vérins 20a et 20b, de manière que les côtés inférieur et supérieur du bâti central 5 de la rampe soient parallèles à la ligne de plus grande pente du sol, de même que l'essieu 1 du véhicule porteur, et que, simultanément, le centre de gravité G de la rampe se trouve dans un plan vertical passant par le centre de la rotule du palier 10. Pour cette position du bâti central 5 de la rampe, ses deux bras latéraux 6a et 6b se trouvent sensiblement parallèles à la ligne de plus grande pente du sol, pourvu que, par construction, les deux bras mentionnés s'étendent perpendiculairement aux côtés latéraux dudit bâti rectangulaire 5; avec cette forme de réalisation, il n'est donc pas nécessaire, pour obtenir un épandage parfaitement régulier, de faire varier les longueurs des haubans 8a et 8b, ni même de prévoir des articulations aux extrémités des bras 8a et 8b de la rampe, qui sont fixées audit bâti 5.

La présente invention n'est pas limitée aux formes de réalisation précédemment décrites. Elle englobe toutes leurs variantes. Dans le cas de la forme de réalisation illustrée sur la figure 5, l'un des deux vérins, 20a et 20b, pourrait être supprimé. Leurs points d'articulation, 21a et 21b, sur le côté supérieur du bâti rectangulaire 5, pourraient être plus rapprochés du point d'articulation 19a de la biellette 19. Dans le cas de la forme de réalisation illustrée sur les figures 1 à 4, le dispositif à ressort 13 à 17 pourrait être remplacé par les moyens élastiques équivalents, disposés de façon à pousser normalement la rampe 5-6 contre les galets élastiques 12a, 12b. Ces galets élastiques, au lieu d'être montés sur le cadre rectangulaire, 4, coulissant verticalement, de façon à rouler sur les surfaces correspondantes, 5a et 5b, du bâti central 5, pourraient être montés sur ce dernier de façon à rouler sur des surfaces correspondantes du cadre coulissant 4. Les galets élastiques 12a et 12b pourraient être remplacés éventuellement par des galets rigides. Les moyens élastiques pour pousser le bâti central 5 de la rampe en direction du cadre coulissant 4 pourraient être supprimés; dans ce cas, en effet, le poids de l'ensemble 5-6a-6b-P, suspendu pendulairement à la rotule 10, suffirait pour appliquer les surfaces de roulement 5a, 5b contre les galets 12a, 12b. L'amortisseur 23, destiné à amortir les chocs et vibrations de direction verticale, est facultatif. Pour les applications où il n'est pas nécessaire de prévoir une possibilité de réglage en hauteur de la rampe de pulvérisation, il est possible de supprimer le cadre coulissant 4 ainsi que les montants verticaux 3a et 3b; dana ce cas, la rampe de pulvérisation, selon la présente invention, peut être suspendue directement en dessous d'un support, solidaire du véhicule, par exemple en forme de potence double, par l'intermédiaire d'une rotule. La présente invention est applicable quelle que soit la constitution de la rampe de pulvérisation, qui peut par exemple ne pas comporter de bâti central tel que 5, et/ou ne comporter qu'un seul bras latéral. La présente invention est également applicable à une rampe de pulvérisation suspendue non pas derrière le véhicule porteur, mais, par exemple, devant celui-ci, ou dans une position intermédiaire. Elle est également applicable à la suspension pendulaire de plusieurs rampes de pulvérisation sur un même véhicule porteur.

**Revendications**

1. Appareil pour la pulvérisation d'un liquide de traitement des plantes, comportant une rampe de pulvérisation (6) dont un élément de bâti (5) est suspendu, par l'intermédiaire d'une rotule (10), à un élément de support (4) fixé à un véhicule (1), tracteur ou remorque, de telle façon que, par rotation sur la rotule (10), l'élément de bâti avec la rampe (5, 6) puisse s'écarter en tous sens de l'élément de support (4), appareil caractérisé par le fait que des galets (12a, 12b) sont montés fous sur l'un des deux éléments (4 et 5), de façon à rouler sur des surfaces appropriées (5a, 5b) de l'autre élément (5 ou 4), lorsque ces deux éléments sont en position normale c'est-à-dire rapprochés, le retour des deux éléments vers cette position normale, en cas de mouvements erratiques du véhicule (1) tendant à écarter les deux éléments, étant due à une force de rappel constituée de façon inhérente par le poids de l'ensemble bâti-rampe aidé, éventuellement, par des moyens élastiques (13—17) tendant à rapprocher de façon permanente les deux éléments.

2. Appareil selon la revendication 1, caractérisé en ce que l'élément de bâti (5) de la rampe de pulvérisation est suspendu à la rotule (10) par au moins une potence (P) qui s'étend, à partir dudit élément de bâti (5), en direction de la rotule (10) et de l'élément de support (4), et que les surfaces de roulement (5a, 5b) se trouvent, lorsqu'elles sont en contact avec les galets (12a, 12b), dans un plan sensiblement vertical, passant entre l'élément de bâti (5) et la rotule (10).

3. Appareil selon la revendication 1 ou 2, caractérisé en ce que les moyens élastiques annexes sont disposés de façon à pousser normalement les galets (12a, 12b) et les surfaces de roulement (5a, 5b) en contact les uns avec les autres.

4. Appareil selon la revendication 1, 2 ou 3, caractérisé en ce ou'au moins la jante des galets (12a, 12b) est en un matériau élastique.

5. Appareil selon l'une quelconque des revendications 1 à 4, caractérisé en ce que les axes de rotation des galets (12a, 12b) ont des prolongements ($\alpha$, $\beta$) qui concourent sur l'axe geometrique horizontal ($\lambda$) de la rotule (10).

6. Appareil selon la revendication 3, caractérisé en ce que les moyens élastiques comprennent un ressort (13) comprimé entre l'élément de bâti (5) de la rampe et une butée arrière (14), solidaire d'une extrémité d'une tige (15), qui traverse librement ledit élément de bâti (5), et dont l'autre extrémité porte un galet fou (16), qui peut rouler, sans déplacement axial, dans un chemin de roulement (17) solidaire de l'élément de support (4).

7. Appareil selon la revendication 6, caractérisé en ce que le chemin de roulement (17) est incurvé en arc de cercle centré sur l'axe horizontal ($\gamma$) de la rotule (10).

8. Appareil selon l'une quelconque des revendications 1 à 7, dont l'élément de bâti (5) de la rampe porte au moins un bras latéral (6a ou 6b), caractérisé en ce qu'une extrémité du bras (6a ou 6b) de la rampe (5-6) est articulée à l'élément de bâti (5), et en ce que ledit bras (6a ou 6b) est supporté par un hauban (8a ou 8b) de longueur réglable, par exemple au moyen d'un vérin (18a ou 18b).

9. Appareil selon la revendication 1, dont l'élément de bâti (5) de la rampe porte au moins un bras latéral (6a ou 6b), caractérisé en ce qu'une biellette (19) articulée (en 19a) est interposée entre la rotule (10) et l'élément de bâti (5), et qu'au moins un organe rigide de longueur réglable, tel qu'un vérin (20a ou 20b), est interposé entre la rotule (10) ou l'élément de support (4) solidaire du véhicule (1), et un point de bâti (21a ou 21b) écarté de l'articulation correspondante (19a) de ladite biellette (19).

**Patentansprüche**

1. Vorrichtung zum Versprühen einer Flüssigkeit zum Behandeln von Pflanzen, mit einer Sprührampe (6), wobei ein Rahmenteil (5) derselben über ein Gelenk (10) an einem am Fahrzeug (1) (Zugfahrzeug oder Anhänger) befestigten Abstützteil (4) so aufgehängt ist, daß durch Drehung im Gelenk (10) das Rahmenteil mit der Sprührampe (5, 6) sich in allen Richtungen von dem Abstützteil (4) entfernen kann, dadurch gekennzeichnet, daß Rollen (12a, 12b) auf einem der beiden Teile (4 und 5) frei drehbar so gelagert sind, daß sie auf entsprechenden Flächen (5a, 5b) des betreffenden anderen Teils (5 oder 4) rollen können, wenn sich diese beiden Teile in ihrer normalen, dh angenäherten Stellung befinden, wobei die Rückführung dieser beiden Teile in ihre normale Stellung im Fall unregelmäßiger Bewegungen des Fahrzeuges, die die Tendenz haben, die beiden Teile voneinander zu entfernen, von einer Rückholkraft herrührt, die von dem Gewicht der Rahmen-Rampen-Anordnung selbsttätig erzeugt wird, ggf unterstützt von elastischen Mitteln (13-17), die die beiden Teile permanent aufeinander zu vorspannen.

2. Vorrichtung nach Anspruch 1, dadurch gekennzeichnet, daß das Rahmenteil (5) der Zerstäubungsrampe am Gelenk (10) mittels eines Trägers (P) aufgehängt ist, der sich von dem Rahmenteil (5) aus in Richtung auf das Gelenk (10) und das Abstützteil (4) erstreckt, und daß die Rollflächen (5a,5b) sich in einer im wesentlichen vertikalen, zwischen dem Rampenteil (5) und dem Gelenk (10) hindurchlaufenden Ebene befinden, wenn sie mit den Rollen (12a,12b) in Berührung stehen.

3. Vorrichtung nach Anspruch 1 oder 2, dadurch gekennzeichnet, daß die zusätzlichen elastischen Mittel so angeordnet sind, daß sie normalerweise die Rollen (12a,12b) und die Rollflächen (5a,5b) in gegenseitige Anlage drücken.

4. Vorrichtung nach Anspruch 1, 2 oder 3, dadurch gekennzeichnet, daß zumindest die Felge der Rollen (12a,12b) aus elastischem Material besteht.

5. Vorrichtung nach einem der Ansprüche 1-4, dadurch gekennzeichnet, daß die Drehachsen der Rollen (12a,12b) Verlängerungen (α,β) haben, die auf der horizontalen geometrischen Achse (λ) des Gelenkes (10) zusammenlaufen.

6. Vorrichtung nach Anspruch 3, dadurch gekennzeichnet, daß die elastischen Mittel aus einer Feder (13) bestehen, die zwischen dem Rahmenteil (5) der Sprührampe und einem rückwärtigen Anschlag (14) komprimiert wird, der mit einem Ende einer Stange (15) fest verbunden ist, welche frei durch das Rahmenteil (5) verläuft und deren anderes Ende eine lose Rolle (16) trägt, die ohne axiale Verschiebung auf einer Rollbahn (17) rollen kann, welche mit dem Abstützteil (4) fest verbunden ist.

7. Vorrichtung nach Anspruch 6, dadurch gekennzeichnet, daß die Rollbahn (17) in einem Kreisbogen gekrümmt ist, dessen Mittelpunkt auf der horizontalen Achse (λ) des Gelenkes (10) liegt.

8. Vorrichtung nach einem der Ansprüche 1-7, bei der das Rahmenteil (5) der Sprührampe mindestens einen seitlichen Arm (6a oder 6b) trägt, dadurch gekennzeichnet, daß ein Ende des Arms (6a oder 6b) der Sprührampe (5-6) an dem Rahmenteil (5) angelenkt ist und daß dieser Arm (6a oder 6b) von einem Halteseil (8a oder 8b) getragen wird, dessen Länge beispielsweise mittels eines Stellmotors (18a oder 18b) veränderbar ist.

9. Vorrichtung nach Anspruch 1, bei der das Rahmenteil (5) der Sprührampe mindestens einen seitlichen Arm (6a oder 6b) trägt, dadurch gekennzeichnet, daß ein Lenker (19) zwischen dem Gelenk (10) und dem Rahmenteil (5) eingefügt ist und daß mindestens ein starres Element veränderbarer Länge wie zB ein Stellmotor (20a oder 20b) zwischen dem Gelenk (10) oder dem mit dem Fahrzeug (1) fest verbundenen Abstützteil (4) und einem Punkt des Rahmens (21a oder 21b) eingefügt ist, der von dem entsprechenden Anlenkpunkt (19a) des Lenkers (19) entfernt ist.

**Claims**

1. Apparatus for spraying a liquid for the treatment of plants, comprising a spray-distributor (6), a frame element (5) of which is suspended by a socket-and-ball bearing (10) to a support element (4) fixed to a tractor or trailer vehicle (1) in such a manner that, by rotation about the bearing (10), the frame element can move together with the distributor (5, 6) away from the support element (4) in any direction, characterized in that rollers (12a, 12b) are mounted loose on one of said two elements (4 and 5) so as to roll on appropriate surfaces (5a, 5b) of the other element (5 or 4) when those two elements are in normal position, that is close to each other, the return of both elements to this normal position, in case of erratic movements of the vehicle (1) tending to move the two elements away from each other, being due to a return force which inherently consists of the weight of the frame-distributor assembly, assisted possibly of resilient means (13—17) which permanently urge both elements one toward the other.

2. Apparatus according to claim 1, wherein the frame element (5) of the spray-distributor is suspended from the bearing (10) by at least one arm (P) extending from the said frame element (5) in the direction of the bearing (10) and the support element (4), and the rolling surfaces (5a, 5b), when in contact with the rollers (12a, 12b), are situated in an approximately vertical plane which passes between the frame element (5) and the bearing (10).

3. Apparatus according to claim 1 or 2, wherein the supplementary elastic means are arranged so as to push the rollers (12a, 12b) and the rolling surfaces (5a, 5b) normally into contact with one another.

4. Apparatus according to claim 1, 2 or 3, in which at least the rim of the rollers (12a, 12b) is made of an elastic material.

5. Apparatus according to anyone of claims 1 to 4, in which the axes of rotation of the rollers (12a, 12b) have extensions (α,β) which meet on the horizontal geometric axis (γ) of the bearing (10).

6. Apparatus according to Claim 3, wherein the elastic means comprises a spring (13) compressed between the frame element (5) of the distributor and a rear abutment (14) integrated with the end of a rod (15), which passes freely through the said frame element (5), the other end of it carrying a loose roller (16) arranged to roll, without axial displacement, in a roller track (17), which is integrated with the said support element (4).

7. Apparatus according to claim 6, wherein the roller track (17) is curved so as to form a circular arc, centred on the horizontal axis (λ) of the bearing (10).

8. Apparatus according to anyone of claims 1 to 7, in which the frame element (5) of the distributor carries at least one distributor side-arm (6a or 6b), characterized in that one end of the arm (6a or 6b) of the distributor (5-6) is articulated to the said frame element (5), and in that the said side-arm (6a, 6b) is supported by a stay (8a or 8b) of adjustable length, for example with the aid of a jack (18a or 18b).

9. Apparatus according to claim 1, in which the frame element (5) of the distributor carries at least one side-arm (6a or 6b), characterized in that an articulated (in 19a) link (19) is placed between the bearing (10) and the frame element (5), and that at least one rigid element of adjustable length such as a jack (20a or 20b), is placed between the bearing (10) or the support element (4) integrated with the vehicle (1) and a point of the frame element (21a or 21b) at a distance from the articulated joint (19a) of the said link (19).

FIG.:1

FIG.:2

FIG.:3

FIG. 4

FIG. 5